**Europäisches Patentamt**

**European Patent Office**

**Office européen des brevets**

(19)

(11) Veröffentlichungsnummer : **0 372 047 B1**

(12) # EUROPÄISCHE PATENTSCHRIFT

(45) Veröffentlichungstag der Patentschrift :
**26.02.92 Patentblatt 92/09**

(21) Anmeldenummer : **89906095.8**

(22) Anmeldetag : **30.05.89**

(86) Internationale Anmeldenummer :
**PCT/EP89/00606**

(87) Internationale Veröffentlichungsnummer :
**WO 89/12182 14.12.89 Gazette 89/29**

(51) Int. Cl.⁵ : **F16D 35/00, B60K 17/346**

(54) **FLÜSSIGKEITSREIBUNGSKUPPLUNG ZUR SELBSTTÄTIG ZU- UND ABSCHALTBAREN DREHMOMENTÜBERTRAGUNG.**

(30) Priorität : **04.06.88 DE 3819044**

(43) Veröffentlichungstag der Anmeldung :
**13.06.90 Patentblatt 90/24**

(45) Bekanntmachung des Hinweises auf die Patenterteilung :
**26.02.92 Patentblatt 92/09**

(84) Benannte Vertragsstaaten :
**AT BE CH DE FR GB IT LI NL SE**

(56) Entgegenhaltungen :
**EP-A- 0 174 566**
**AT-B- 383 782**
**DE-A- 2 425 797**
**DE-A- 3 025 562**
**DE-A- 3 612 189**
**GB-A- 1 106 604**
**GB-A- 2 083 595**

(56) Entgegenhaltungen :
**NL-C- 114 125**
**US-A- 3 209 874**
**US-A- 3 255 853**
**US-A- 3 385 408**
**US-A- 3 400 796**

(73) Patentinhaber : **BASF Aktiengesellschaft**
**Carl-Bosch-Strasse 38**
**W-6700 Ludwigshafen (DE)**

(72) Erfinder : **BUNG, Richard**
**Rheinrugenstrasse 49**
**W-6700 Ludwigshafen (DE)**
Erfinder : **LAUN, Martin**
**Dürerstrasse 22**
**W-6700 Ludwigshafen (DE)**
Erfinder : **LOUIS, Gerd**
**Tolhausstrasse 21**
**W-6719 Carlsberg (DE)**
Erfinder : **SCHMIDT, Franz**
**Trommstrasse 3**
**W-6800 Mannheim 1 (DE)**

EP 0 372 047 B1

## Beschreibung

Die Erfindung betrifft eine Flüssigkeitsreibungskupplung zur selbsttätig, nach über- oder Unterschreiten einer Drehzahldifferenz von An- und Abtriebsseite der Kupplung, zu- und abschaltbaren Drehmomentübertragung, insbesondere Flüssigkeitsreibungskupplungen zur selbsttätigen Zu- und Abschaltung von Mehrradantrieben in Kraftfahrzeugen.

Bekannt ist durch die DE-A 24 25 797 eine Vorrichtung zur übertragung eines variablen Drehmoments mittels einer viskosen Substanz, welche zwischen zwei, relativ zueinander rotierenden Körpern angeordnet ist. Bei viskosen, z.B. newtonschen Substanzen, treten keine als Schalteffekt zu bezeichnende Drehmomentübertragungen auf, da sich die Drehzahldifferenz stetig mit dem Drehmoment ändert.

Eine Flüssigkeitsreibungskupplung, deren Drehmomentübertragung durch Reibungskräfte erfolgt, welche durch Erwärmung einer viskosen Flüssigkeit erzeugt werden, ist durch die DE-A 36 22 416 bekannt. Neben der stetigen Abhängigkeit von Drehmoment und Differenzdrehzahl bei Verwendung nur viskoser Flüssigkeiten, kann wegen des thermisch trägen Ansprech- und Abklingverhaltens der Drehmomentübertragung auch hierbei nicht von einem Schalteffekt gesprochen werden. Um bei in Kraftfahrzeugen gegebenen Bauvolumen, die dafür benötigten Drehmomente übertragen zu können, müssen hochviskose Flüssigkeiten bei zusätzlich kleinen Scher- bzw. Lamellenabständen verwendet werden. Dies führt neben der komplizierten und daher teueren Konstruktion zu erheblichen Anfangsdrehmomenten mit entsprechend permanenter Drehmomentübertragung.

Der Erfindung liegt die Aufgabe zugrunde, eine Flüssigkeitsreibungskupplung mit selbsttätig, nach Über- oder Unterschreiten einer Drehzahldifferenz von An- und Abtriebsseite der Kupplung, zu- und abschaltbarer Drehmomentübertragung, insbesondere zur Zu- und Abschaltung von Mehrradantrieben von Kraftfahrzeugen in konstruktiv einfacher Weise zu ermöglichen.

Diese Aufgabe wird erfindungsgemäß durch die Merkmale der Patentansprüche gelöst.

Derartige, sich über eine Drehzahldifferenz selbsttätig zu- und abschaltende Flüssigkeitskupplungen lassen sich nach einer weiteren Ausbildung der Erfindung zur Drehmomentschaltung von Vorder- und Hinterachse und/oder einer oder mehrerer Einzelachsen in Kraftfahrzeugen verwenden. Sie erlauben eine, ohne Zutun des Fahrers oder eines Hilfsaggregats sich nur im Bedarfs- oder Sicherheitsfall, wie Durchrutschen oder Aquaplaning der Antriebsräder eines Kraftfahrzeuges und der dabei auftretenden Drehzahldifferenz, zuschaltende und nach Unterschreiten derselben wieder abschaltende Drehmomentübertragung auf eine weitere Fahrzeugachse bzw. auf beide Räder einer Achse. Das Abschalten nach einem Bedarfs- oder Sicherheitsfall ermöglicht wieder das normale Antriebs-, Fahr- und Bremsverhalten des Kraftfahrzeuges.

In einer weiteren Ausbildung der Erfindung wird die selbsttätige Drehmomentschaltung durch Integration einer derartigen Flüssigkeitskupplung in ein zwischen Antriebsstrang und zwei Radachsen befindliches Ausgleichsgetriebe, auch Differentialgetriebe genannt, geschaffen.

In den Patentschriften DE-A 30 25 562 und EP-A-01 74 566 ist die Herstellung und Grundfunktion dilatanter Copolymerdispersionen beschrieben. Weitere Merkmale und Einzelheiten der Erfindung ergeben sich aus der nachfolgenden Beschreibung einer Kennlinie einer extrem dilatanten Copolymerdispersion und spezieller Ausführungsbeispiele.

Es zeigen:

Fig. 1 die charakteristische Kennlinie einer extrem dilatanten Copolymerdispersion,

Fig. 2 eine erfindungsgemäße Anwendung als zu und abschaltbare Flüssigkeitskupplung in Ausbildung als Kardanwelle,

Fig. 3 eine erfindungsgemäße Anwendung als selbsttätig zu- und abschaltbare Drehmomentübertragung in einem Ausgleichsgetriebe einer Kraftfahrzeugachse.

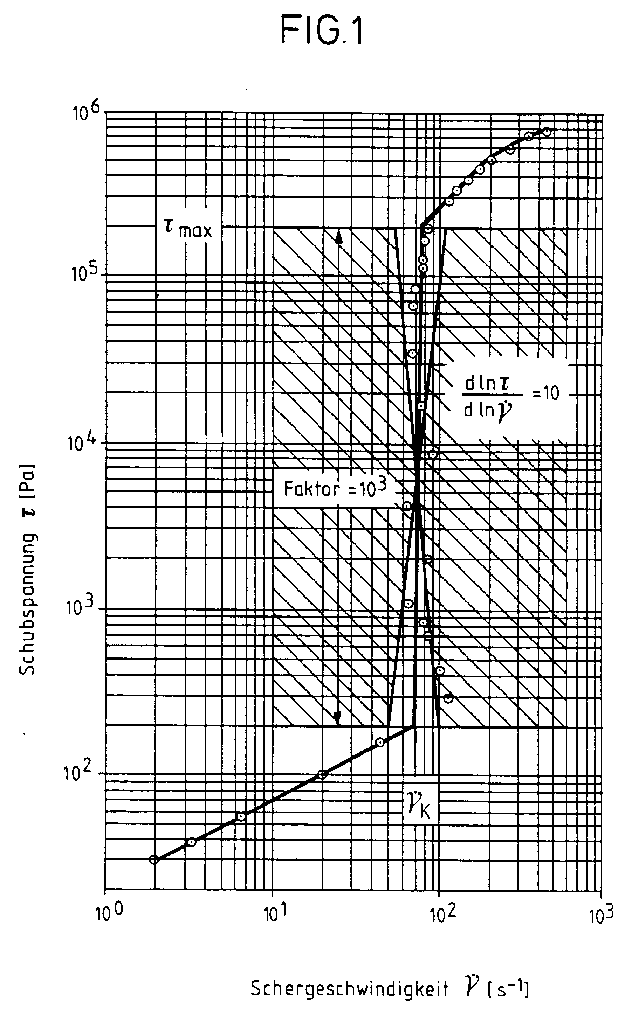

In Figur 1 ist der, mit einem Kapillarviskosimeter gemessene, charakteristische Schubspannungsverlauf einer extrem dilatanten Copolymerdispersion als Funktion der Schergeschwindigkeit dargestellt. Befindet sich die Dispersion zwischen zwei sich relativ zueinander drehenden und einen kreisförmigen Scherspalt bildenden Zylinderflächen, ist die Schubspannung dem übertragbaren Drehmoment und die Schergeschwindigkeit der Drehzahl direkt proportional. Die Kennlinie zeigt drei deutlich voneinander getrennte Bereiche:

a) Einen unterkritischen Bereich ($\gamma \leqq \gamma_k$) mit niedrigem Schubspannungsniveau,

b) einen kritischen Bereich ($\gamma = \gamma_k$) mit extrem ansteigender Schubspannung ($\tau \leqq \tau_{max}$) und

c) einen überkritischen Bereich mit $\tau > \tau_{max}$.

überraschend wurde die dauerlaststabilisierende Wirkung von (Meth)Allylverbindungen als Polymerisationskomponenten gefunden. Die erfindungsgemäße Dispersion wird durch Emulsionspolymerisation hergestellt. Die nachfolgend genannten Teile beziehen sich, wenn nicht anders angegeben, auf das Gewicht des fertigen Polymerisats.

Die Polymeren der Grunddispersion bestehen aus 74.4 Teilen Styrol, 15 Teilen Diallylphthalat 2 Teilen Ethylacrylat, 5 Teilen Acrylsäure und 2 Teilen Methacrylamid als Comonomere. Als Polymerisationsinitiatoren wurden 0,7 Teile Natriumpersulfat, 0,6 Teile Cumolhydroperoxid und als Emulgator 0,3 Teile Dinatriumdodecyldiphenylätherdisulfonat eingesetzt. Mit 1245 Teilen Wasser führte der Ansatz zu einem Polymerisatgehalt von ca. 45 Gew.-%, bezogen auf die Grunddispersion.

Die Grunddispersion wurde gefriergetrocknet und das getrocknete Pulver zu 62 Teilen, bezogen auf 100 Teile der fertigen Dispersion, in einem wäßrigen Dispergiermittel, in welchem 20 Teile Lithiumchlorid, bezogen auf 100 Teile Dispergiermittel, und 0,87 Teile Lithiumhydroxid, bezogen auf das trockene Pulver, gelöst wurden, redispergiert.

Der extreme Schubspannungsanstieg wird durch die kritische Schergeschwindigkeit $\dot{\gamma}_k$ gekennzeichnet und kann zur Schaltung von Schubspannungen bzw. Drehmomenten genutzt werden. Zur Definition der extremen Dilatanz dienen als Grenzwerte die Gradienten von logarithmischer Schubspannung und Schergeschwindigkeit. In Fig. 1 ist der Bereich

$$\frac{d \ln \tau}{d \ln \gamma} \geqq 10$$

am Ort des mittleren Schubspannungsanstiegs und der kritischen Schergeschwindigkeit $\dot{\gamma}_k$ eingetragen. Die Schubspannung steigt innerhalb dieses Bereiches um den Faktor $10^3$ an.

Der zeitliche Anstieg der Schubspannung erfolgt erfahrungsgemäß bei nur kleiner Überschreitung von $\dot{\gamma}_k$ innerhalb von $10^{-3}$ - $10^{-2}$ Sekunden. Bei Unterschreiten derselben kritischen Schergeschwindigkeit $\dot{\gamma}_k$ relaxiert die Schubspannung nach Belastung von selbst im Bereich von $10^{-2}$ - $10^{-1}$ Sekunden. Damit können selbsttätige Schaltzeiten von erfindungsgemäßen Flüssigkeitskupplungen von $10^{-2}$ Sekunden realisiert werden.

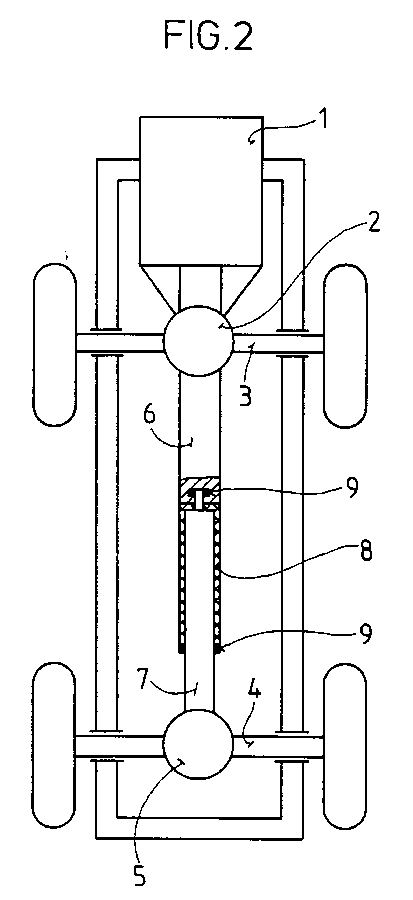

Figur 2 zeigt schematisch die Anwendung einer extrem dilatanten Flüssigkeitskupplung in Ausbildung als Kardanwelle in einem Kraftfahrzeug. Der Motor treibt über das Ausgleichsgetriebe 2 die Achse 3 an. Über eine speziell ausgebildete Kardanwelle 6, 7 wird über das Ausgleichsgetriebe 5 die andere Achse 4 angetrieben. Die Kardanwelle selbst besteht aus den zwei teilweise ineinandergesteckten und gegeneinander drehbaren Wellenteilen 6 und 7 und bilden dabei einen, mit einer extrem dilatanten Dispersion gefüllten, Scherspalt 8 aus. Beide Enden des Scherspalts sind zur Abdichtung und Lagerung mit entsprechenden Dicht- und Lagerelementen 9 versehen. Auf sehr einfache Weise läßt sich damit bei Erreichen einer, sowohl durch die Scherspaltgröße (vorzugsweise 0,5 - 5 mm) als auch die Lage der kritischen Schergeschwindigkeit $\dot{\gamma}_k$ der Dispersionskennlinie (vorzugsweise 1-100 s$^{-1}$) veränderliche, einstellbaren Drehzahldifferenz ein sich selbsttätig zu- und abschaltendes Drehmoment auf die Hinterachse übertragen. Die Drehzahldifferenz soll dabei im allgemeinen so groß gewählt werden, daß die bei engen Kurvenfahrten auf trockener Straße auftretenden Differenzdrehzahlen der beiden Achsen (mit ihren Ausgleichsgetrieben) kleiner als die eingestellte sind.

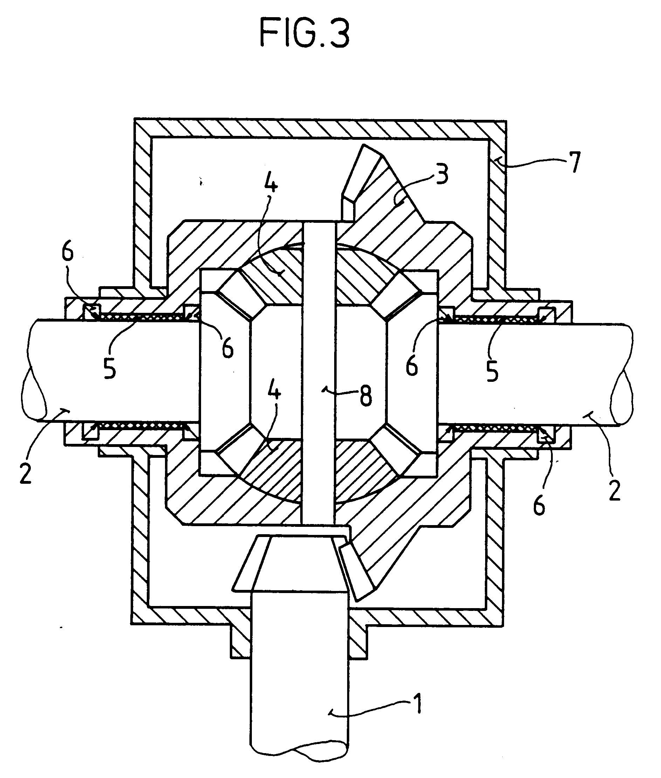

In Figur 3 ist schematisch ein Ausgleichsgetriebe eines Kraftfahrzeugs mit integrierter, dilatanter Flüssigkeitskupplung dargestellt. Über die Kegelzahnradachse 1 wird ein speziell ausgebildetes Tellerzahnrad 3 angetrieben. Mittels der, durch den Bolzen 8 mitgenommenen und auf ihm drehbar gelagerten Ausgleichszahnräder 4 werden die beiden Radachsen 2 angetrieben. Das Getriebe wird durch das Gehäuse 7 gelagert und abgeschlossen. Das Tellerzahnrad 3 kann nun so ausgebildet werden, daß über verlängerte und mit den beiden Radachswellen 2 einen zylindrischen Scherspalt bildenden Auflagerbüchsen, welche die durch Dichtelemente 6 beidseitig eingeschlossene dilatante Kupplungsdispersion 5 enthalten, das Tellerzahnrad als Kupplungselement zwischen Antriebswelle 1 und den beiden Radachsen 2 wirkt. Bis zu einer, in weiten Bereichen durch Scherspaltgröße und dilatanter Flüssigkeit einstellbaren, kritischen Drehzahldifferenz der beiden Radachsen 2 besitzt das Ausgleichsgetriebe seine normale Funktion. Bei nur geringem über- oder Unterschreiten dieser Drehzahldifferenz wirkt das Ausgleichsgetriebe jedoch zusätzlich als selbsttätig zu- und abschaltbare Drehmomentkupplung, wobei über einen großen Drehmomentbereich die eingestellte Drehzahldifferenz konstant bleibt. Diese Zusatzfunktion des Ausgleichsgetriebes bietet neben der einfachen und selbsttätigen zu- und abschaltbaren Sperrfunktion den besonderen Vorteil, bei einer auf Kurvenfahrten des Fahrzeugs abgestimmten, kritischen Drehzahldifferenz der dilatanten Flüssigkeitskupplung, in einer sicherheitsrelevanten Antriebssituation bei Kurvenfahrten eine darauf abgestimmte, selbsttätige Drehmomentzuschaltung auf beide Räder zu bewirken.

## Patentansprüche

1. Flüssigkeitsreibungskupplung zur selbsttätig, nach Über- oder Unterschreiten einer Drehzahldifferenz von An- und Abtriebsseite der Kupplung, zu- und abschaltbaren Drehmomentübertragung, insbesondere zur selbsttätigen Zu- und Abschaltung von Mehrradantrieben von Kraftfahrzeugen, mit einer aus einem dilatanten Fluid bestehenden Arbeitsflüssigkeit, dadurch gekennzeichnet, daß die Arbeitsflüssigkeit eine extrem dilatante Copolymerdispersion ist, deren dilatante Kennwerte kritische Schergeschwindigkeit $\dot{\gamma}_k$ und maximal übertragbare Schubspannung $\tau_{max}$ durch Emulsionspolymerisation von - bezogen auf das fertige Polymerisat -zusätzlichen 5 bis 30 Gew.-%, vorzugsweise 8 - 18 Gew.-% (Meth)Allylverbindungen mit mindestens 2 polymerisierbaren Doppelbindungen im Molekül, z.B. Diallylphthalat und/oder (Meth)allyl(meth)acrylaten als Comonomeren dauerlaststabilisiert werden.

2. Flüssigkeitskupplung nach Anspruch 1, dadurch gekennzeichnet, daß die extrem dilatante Copolymerdispersion zur Drehmomentschaltung und -übertragung der Vorder- und Hinterachse und/oder einer oder mehrerer Einzelachsen eines Kraftfahrzeugs dient.

3. Flüssigkeitskupplung nach Anspruch 1, dadurch gekennzeichnet, daß die extrem dilatante Copolymerdispersion zur Drehmomentschaltung und -übertragung in ein oder mehreren Kraftfahrzeugausgleichgetrieben als selbsttätig zu- und abschaltbare Differentialsperre integriert ist.

## Revendications

1. Accouplement à friction hydraulique pour la transmission de couple, automatique, connectable et déconnectable, après dépassement vers le haut ou vers le bas d'une différence de vitesse entre les côtés menant et mené de l'accouplement, en particulier pour la connection et la déconnection automatiques de transmissions à plusieurs roues de véhicules automobiles, avec un liquide de travail constitué d'un fluide dilatant, caractérisé par le fait que le liquide de travail est une dispersion de copolymère extrèmement dilatante, dont les caractéristiques dilatantes, vitesse de cisaillement critique $\dot{\gamma}_k$ et contrainte de cisaillement transmissible au maximum $\tau_{max}$, sont stabilisés en charge permanente, par polymérisation en émulsion de 5 à 30 % en poids, avantageusement 8-18 % en poids additionnels - rapportés au polymérisat fini - de composés (meth)allyliques ayant au moins 2 doubles liaisons polymérisables dans la molécule, par exemple diallylphtalate et/ou (meth)ally (meth)acrylates, comme comonomères .

2. Accouplement hydraulique selon la revendication 1, caractérisé par le fait que la dispersion de copolymère extrèmement dilatante sert à la mise en circuit et à la transmission de couple aux arbres avant et arrière et/ou à un ou plusieurs arbres isolés d'un véhicule automobile.

3. Accouplement hydraulique selon la revendication 1, caractérisé par le fait que la dispersion de copolymère extrèmement dilatante est intégrée comme barrage différentiel connectable et déconnectable automatique pour la mise en circuit et à la transmission de couple dans un ou plusieurs différentiels de véhicule automobile.

## Claims

1. A hydraulic friction clutch for automatic torque transmission activation or deactivation following an overshoot or undershoot of a speed difference between the drive side and the driven side of the clutch, in particular for automatic activation and deactivation of multiwheel drives of motor vehicles, comprising a dilatant working fluid which is an extremely dilatant copolymer dispersion whose dilatant characteristics of critical shear rate $\dot{\gamma}_c$ and maximum transmissable shear stress $\tau_{max}$ are permanently stabilized by emulsion polymerization of - based on the ready-prepared polymer - an additional 5-30% by weight, preferably 8-18% by weight, of a (meth)allyl compound having at least two polymerizable double bonds in the molecule, eg. diallyl phthalate, or a (meth)allyl (meth)acrylate as comonomer.

2. A hydraulic clutch as claimed in claim 1, wherein the extremely dilatant copolymer dispersion serves to switch and transmit torque between the front and the back axle and/or between one or more individual axles of a motor vehicle.

3. A hydraulic clutch as claimed in claim 1, wherein the extremely dilatant copolymer dispersion for torque switching and transmission has been integrated in one or more motor vehicle differential gears as an automatically activatable and deactivatable differential barrier.

# FIG.1

Schubspannung $\tau$ [Pa]

Schergeschwindigkeit $\dot{\gamma}$ [s$^{-1}$]

$\tau_{max}$

$\dfrac{d\ln\tau}{d\ln\dot{\gamma}} = 10$

Faktor $= 10^3$

$\dot{\gamma}_K$

# FIG.2

# FIG.3